# EUROPÄISCHE PATENTANMELDUNG

(11) **EP 1 591 287 A2**
(43) Veröffentlichungstag der Anmeldung: **02.11.2005**
(21) Anmeldenummer: 05007237.0
(22) Anmeldetag: 02.04.2005
(51) Int. Cl.: B60J 1/20

(54) **Auszugsprofil mit justierbarer Zentrierung**

(30) Priorität: 27.04.2004 DE 102004020531
(71) Anmelder: BOS GmbH & Co. KG, 73760 Ostfildern (DE)
(72) Erfinder: Hansen, Melf, 75053 Gondelsheim (DE); Maier, Matthias, 73733 Esslingen (DE)
(74) Vertreter: Rüger, Barthelt & Abel Patentanwälte

(57) **Zusammenfassung**

Ein Fensterrollo (12) für Kraftfahrzeuge weist eine drehbar gelagerte Wickelwelle auf, an der mit einer Kante eine Rollobahn befestigt ist. Die andere Kante ist an einem Zugstab (21) gefesselt, der endseitig in Führungsschienen (13) geführt ist. Der Abstand der Führungsschienen ändert sich in Bewegungsrichtung der Rollobahn gesehen sehr stark, weshalb der Zugstab teleskopartig längenveränderlich ist. Er setzt sich aus einem Mittelstück und zwei Endstücken (38) zusammen, wobei mit Hilfe einer Zentriereinrichtung dafür gesorgt wird, dass das Mittelstück immer zentriert gegenüber den Endstücken bleibt.

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet.

Hierzu ist es aus der DE 100 57 760 A1 bekannt, seitlich neben dem Heckfenster zwei Führungsschienen anzubringen, in denen der Zugstab der Rollobahn endseitig geführt ist. Der Zugstab ist längenverstellbar und setzt sich aus einem Mittelstück sowie zwei in dem Mittelstück verschieblich gelagerten Endstücken zusammen, um der unterschiedlichen Fensterbreite folgen zu können. Die Betätigung geschieht durch die in den Führungsschienen verschieblich geführten Schubgliedern.

Das Mittelstück ist rohrförmig mit ovalem Querschnitt. In diesem Mittelstück sind die Endstücke teleskopartig verschiebbar. Zur Zentrierung des Mittelstücks gegenüber dem Mittelstück ist in diesem ein Zahnrad drehbar gelagert, mit dem auf gegenüber liegenden Seiten Zahnstangen kämmen, die mit den Endstücken verbunden sind. Hierdurch erzwingt die translatorische Bewegung des einen Endstücks relativ zu dem Mittelstück eine gegenphasige Bewegung des anderen Endstück gegenüber dem Mittelstück.

Diese Lösung ist sehr erfolgreich wenn es darum geht Schrägfalten in der Rollobahn zu vermeiden, die von einer Dezentrierung des Mittelstücks herrühren. Allerdings setzt die Lösung voraus, dass eine fehlerfrei Montage erfolgt.

Ausgehend hiervon ist es Aufgabe der Erfindung, ein Fensterrollo der oben genannten Art mit einer justierbaren Zentrierung zu schaffen.

Diese Aufgabe wird erfindungsgemäß durch das Fensterrollo mit den Merkmalen des Anspruches 1 gelöst.

Das erfindungsgemäße Fensterrollo ist mit einer Zentriereinrichtung versehen, die dafür sorgt, dass das Mittelstück des Zugstabs weitgehend zentriert bleibt.

Als Zentriereinrichtung wird ein Getriebe verwendet, das nach dem Prinzip des Differenzialgetriebes arbeitet.

Durch das Differenzialgetriebe wird die Bewegung eines Endstücks bezüglich des Mittelstücks auf das andere Endstück gegensinnig übertragen, wobei der Verschiebehub betragsmäßig gleich dem Verschiebehub des erstgenannten Endstücks ist. Die beiden Endstücke werden, gleichgültig welches betätigt wird, auf diese Weise gegensinnig um den gleichen Betrag gegenüber dem Mittelstück hin und her geschoben. Dies hat umgekehrt eine zwangsläufige Zentrierung des Mittelstücks zur Folge, wenn sich die Endstücke relativ zueinander zu bewegen.

Zwecks Justage ist die Lage des Differenzialgetriebes relativ zu der Längsrichtung der Rollobahnkante einstellbar. Die Einstellung kann darin bestehen, das Übertragungs-und Kuppelglied in dem Mittelstück zu verschieben oder das Mittelstück gegenüber der Rollobahn zu verschieben und anschließend zu fixieren.

Das Differenzialgetriebe kann formschlüssig arbeiten oder auch reibschlüssig. Die reibschlüssige Ausführungsform arbeitet unter Umständen nicht so genau wie die formschlüssige Anordnung, läßt sich aber etwas einfacher montieren.

In jedem Fall ist es vorteilhaft, wenn das Mittelstück von einem Rohr, vorzugsweise von einem Profilrohr gebildet ist, weil die Endstücke im Profilrohr drehgesichert verschieblich sind. Das Profilrohr hält die Rollobahn von der Zentriereinrichtung getrennt und schützt gleichzeitig die Zentriereinrichtung.

Die Führungsmittel sind zweckmäßigerweise Führungsschienen, die eine Führungsnut enthalten. Gleichwohl ist die erfindungsgemäße Lösung auch bei Fensterrollos anzuwenden, bei denen Zugstab auf stangenförmigen Führungsschienen läuft und endseitig Ösen aufweist.

Zum Bewegen der Rollobahn sind bevorzugt ein Federmotor und ein Elektromotor vorgesehen. Weiter bevorzugt sitzt der Federmotor in der Wickelwelle, während der Elektromotor den Zugstab antreibt. Mit dieser Anordnung wird die Rollobahn zwangsläufig und ohne größeren Aufwand zwischen der Wickelwelle und dem Zugstab gespannt gehalten. Gleichwohl ist auch die andere Antriebsweise denkbar, bei der mit Hilfe von Federn der Zugstab in Richtung auf die ausgefahrene Stellung vorgespannt ist, während die Wickelwelle durch den Elektromotor angetrieben ist.

Die Rollobahn selber besteht vorzugsweise aus einem Gewirk oder einer gelochten und eingefärbten Kunststofffolie.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
- Fig. 1: einen Pkw in einer Rückansicht, unter Veranschaulichung eines erfindungsgemäßen ausgezogenen Heckscheibenrollos,
- Fig. 2: den prinzipiellen Aufbau des Heckscheibenrollos nach Fig. 1,
- Fig. 3: den Zugstab des Heckscheibenrollos in einer perspektivischen Schnittdarstellung,
- Fig. 5: den Zugstab nach Fig. 4 in einer Draufsicht im Bereich des Ritzels,
- Fig. 7: ein anderes Ausführungsbeispiel für eine justierbare Zentriereinrichtung, in einer schematisierten Darstellung.

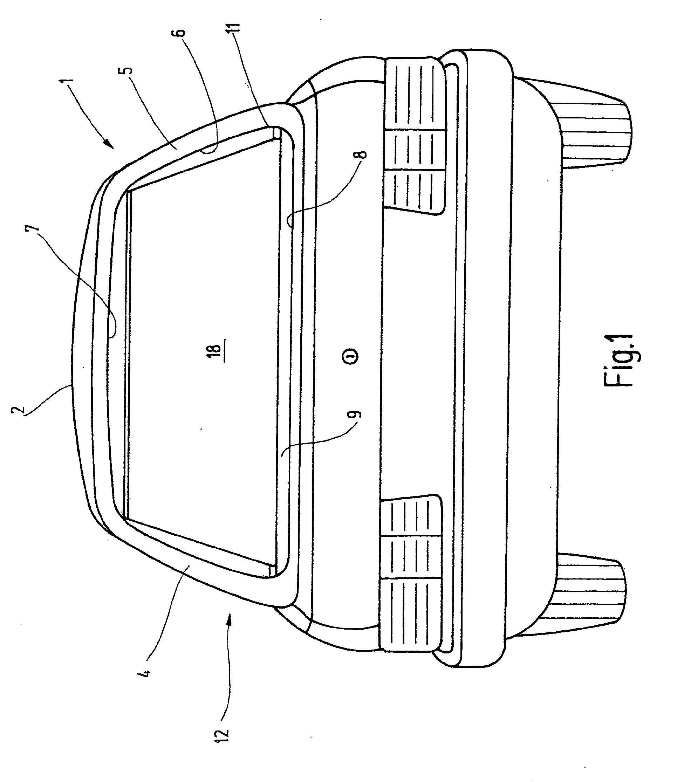

Fig. 1 zeigt in einer schematischen Darstellung die Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterbrüstung 8 grenzen. In der Heckfensteröffnung 6 sitzt in bekannter Weise, beispielsweise mittels Fenstergummi eingeklebt, eine Heckscheibe.

Im Inneren des Pkw 1 befindet sich vor der Innenseite der Heckscheibe eine Hutablage 9, die sich zwischen der Fensterunterkante 8 und einer in der Figur nicht erkennbaren Rücksitzlehne horizontal erstreckt. In der Hutablage 9 verläuft ein gerader Auslaufschlitz 11.

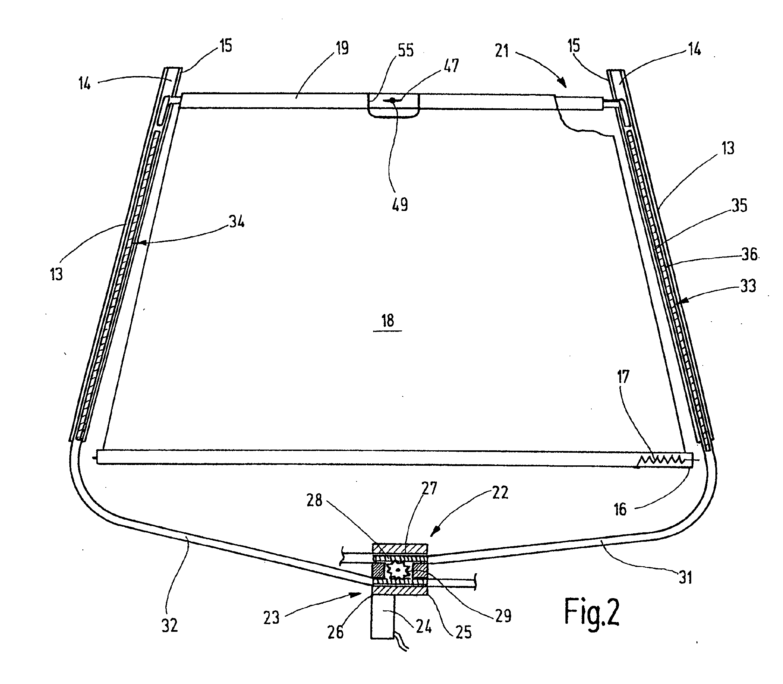

Der Auslaufschlitz 11 gehört zu einem Heckfensterrollo 12, dessen prinzipieller Aufbau in Fig. 2 stark schematisiert veranschaulicht ist.

Das Heckfensterrollo 12 weist zwei Führungsschienen 13 auf, die neben den seitlichen Rändern der Heckfensteröffnung 7 an den beiden C-Säulen 4 und 5 befestigt ist. In jeder Führungsschiene 13 befindet sich eine hinterschnittene Führungsnut 14 mit einem nach außen sich öffnenden Schlitz 15. Die Führungsschiene 13 ist in der Figur aufgeschnitten gezeigt.

Die Führungsschienen 13 reichen nach unten durch den Schlitz 11 bis unterhalb der Hutablage 9.

Unterhalb der Hutablage 9 ist, wie Figur 2 schematisch zeigt, eine Wickelwelle 16 drehbar gelagert. Die Lagereinrichtungen sind nicht veranschaulicht, weil sie für das Verständnis der Erfindung nicht erforderlich sind.

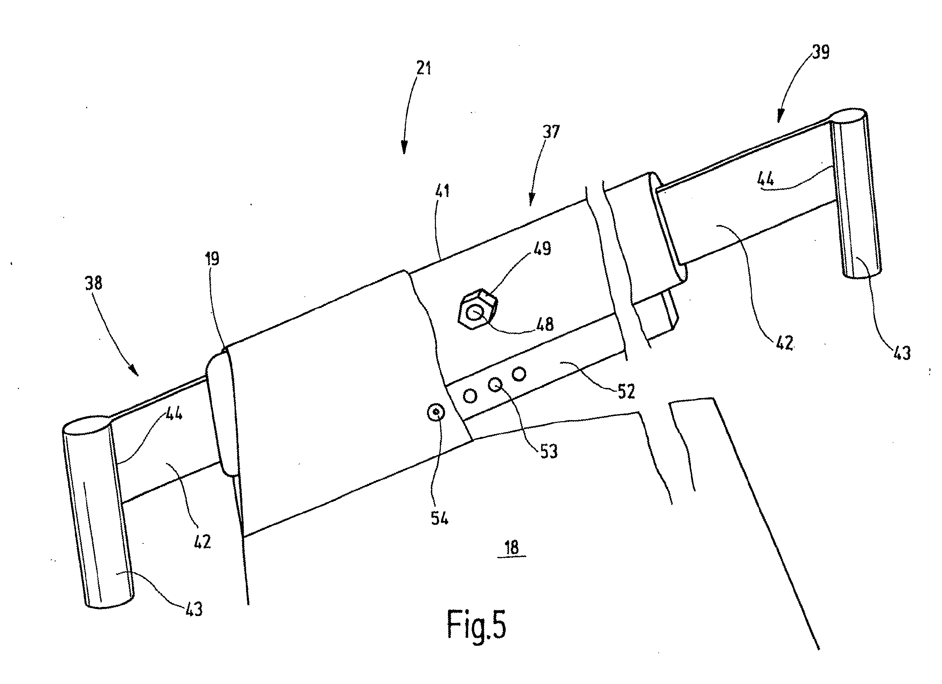

Die Wickelwelle 16 ist rohrförmig und beherbergt einen Federmotor 16, der in Fig. 5 schematisiert dargestellt ist. Der Federmotor 16 besteht aus einer Schraubenfeder, die mit einem Ende im Inneren der Wickelwelle 16 festgelegt ist und anderenends an einem der nicht veranschaulichten Lagerböcke zum Lagern der Wickelwelle 16 verankert ist.

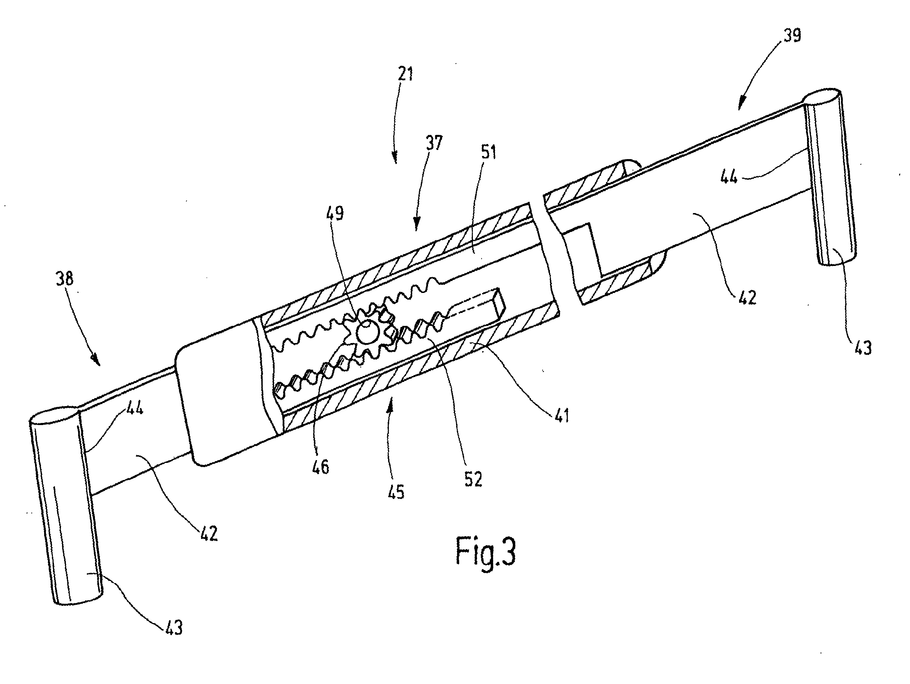

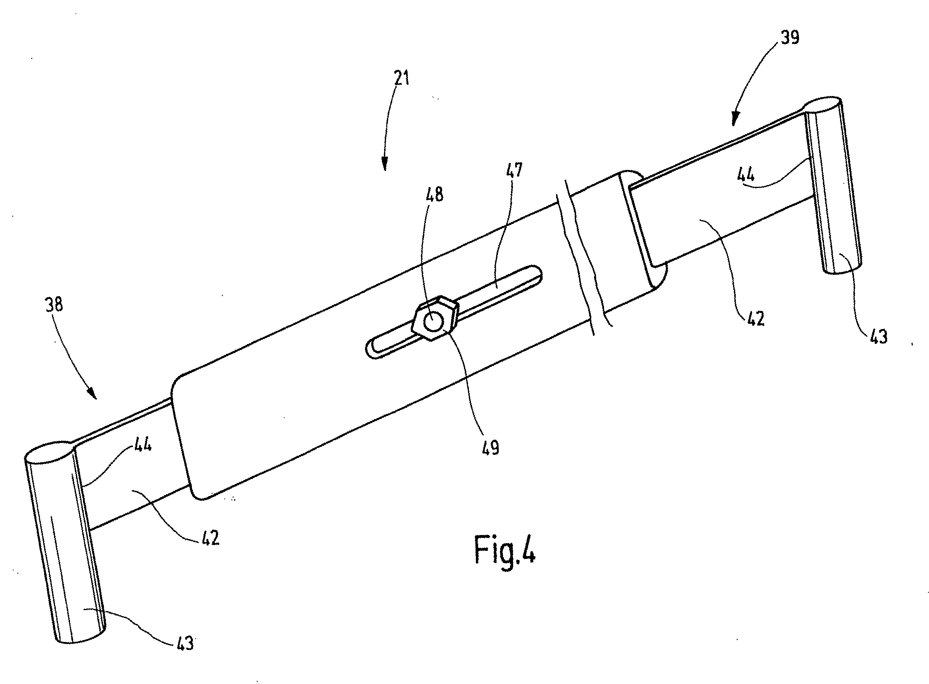

An der Wickelwelle 16 ist mit einer Kante eine Rollobahn 18 befestigt, deren Zuschnitt eine trapezförmige Annäherung der Kontur des Heckfensters 6 ist. Die von der Wickelwelle 16 abliegende Kante ist zu einer schlauchförmigen Schlaufe 19 geformt, in der ein Zugstab 21 sitzt. Der Zugstab 21 ist in der Schlaufe 19 bezüglich der Längsrichtung des Zugstabs 21 festgelegt. Er ist in den Fig. 3 und 4 im Einzelnen gezeigt.

Um die Rollobahn 18 auszufahren ist eine Antriebseinrichtung 22 vorgesehen, die in Figur 2 stark schematisiert gezeigt ist.

Zu der Antriebseinrichtung 22 gehört ein Getriebemotor 23, der sich aus einem permanent erregten Gleichstrommotor 24 und einem Getriebegehäuse 25 zusammensetzt. In dem Getriebegehäuse 25 sind parallel zueinander zwei Führungskanäle 26 und 27 enthalten, zwischen denen auf einer Ausgangswelle 28 ein Ausgangszahnrad 29 vorgesehen ist. Das Ausgangszahnrad 29 kann über die damit drehfest verbundene Ausgangswelle 28 wahlweise in beiden Drehrichtungen in Gang gesetzt werden.

Von dem Führungskanal 27 geht ein Führungsrohr 31 zu dem unteren Ende der Führungsnut 14 in der rechten Führungsschiene 13. Der Führungskanal 26 ist am linken Ende über ein Führungsrohr 32 mit dem unteren Ende der Führungsnut 14 in der linken Führungsschiene 13 verbunden.

Sowohl durch den Führungskanal 26 und das Führungsrohr 32 als auch durch den Führungskanal 27 und das Führungsrohr 31 verläuft jeweils ein biegeelastisches Schubglied 33 bzw. 34 in die betreffende Führungsnut 14. Der jeweils nicht benutzte Teil der Schubglieder 33, 34 wird in Speicherrohre zurückgeschoben, die von dem jeweils anderen Ende der Führungskanäle 26, 27 ausgehen.

Die beiden Schubglieder 33 und 34 haben denselben Aufbau. Sie bestehen jeweils aus einer elastisch biegsamen Seele 35, die auf ihrer Außenseite eine oder mehrere Rippen 36 trägt, die dort ein ein- oder mehrgängiges Gewinde bilden. Die Rippen 36 stehen radial vor und laufen schraubenförmig über die zylindrische Seele 35 von einem Ende des Schubglieds 33, 34 bis zum anderen Ende. Das Ausgangszahnrad 29 trägt eine Verzahnung, die zwischen die von den Rippen 36 gebildeten Nuten eingreifen kann. Auf diese Weise ist das Ausgangszahnrad 29 formschlüssig mit den Schubgliedern 33 und 34 gekuppelt.

Zu dem Zugstab 21 gehören im Wesentlichen ein Mittelstück 37 sowie zwei gegenüber dem Mittelstück 37 teleskopartig bewegliche Endstücke 38 und 39.

Das Mittelstück 37 ist ein ovales Rohr 41 mit einem konstanten Querschnitt, jeweils über die Länge gesehen. Die Flachseiten liegen parallel zu der Ebene der aufgespannten Rollobahn 18. Die Länge des Rohres 41 entspricht der Länge der schlauchförmigen Schlaufe 19 und damit der entsprechenden Kante der Rollobahn 18.

Das Endstück 38 hat eine L-förmige Gestalt und setzt sich aus einem Arm 42 und einem Führungsstück 43 zusammen. Der Arm 42 hat einen solchen Querschnitt, dass er in dem Innenraum des Rohres 41 weitgehend spielfrei längsverschieblich ist. Sein außenliegendes Ende geht bei 44 einstückig in das Führungsstück 43 über, das im Querschnitt an den kreisförmigen Teil der Führungsnut 14 angepasst ist, während die Breite des Armes 42 der Weite des Schlitzes 15 entspricht.

Die beiden Endstücke 38 und 39 sind hinsichtlich des Armes 42 und des Führungsstücks 43 gleich gestaltet.

Etwa in der Mitte des Rohres 41 befindet sich ein Differenzialgetriebe 45. Zu dem Differenzialgetriebe 45 gehört ein Ritzel 46, das um eine Achse frei drehbar ist, die auf der großen Achse des Profilquerschnitts des Rohres 41 senkrecht steht.

Am Ort des Ritzels 46 enthält das Rohr 41 auf der dem Betrachter zugekehrten Flachseite ein Langloch 47, das mit einem Langloch auf der gegenüber liegenden Flachseite fluchtet. Die Langlöcher 47 liegen parallel zu der Längserstreckung der Schlaufe 19 und damit zur Querkante der Rollobahn 18.

Das Ritzel 46 enthält eine Durchgangsbohrung 49, deren Durchmesser der Weite des Langlochs 47 entspricht. Durch die beiden Langlöcher 47 und die Bohrung 49 des Ritzels 46 führt eine Kopfschraube 48, deren Schraubenkopf bezogen auf Figur 4 auf der Rückseite, d.h. der dem Betrachter abgekehrten Seite, liegt. Auf der dem Betrachter zugekehrten Seite ist auf dem Gewindeschaft der Schraube 48 eine Klemmmutter 49 aufgeschraubt. Die Schraube 48 dient als Lagerungsachse für das Ritzel 46, das auf der Schraube 48 frei drehbar ist.

Um die Lauffähigkeit des Ritzels 46 zu verbessern, kann es gegebenfalls auf einer auf der Schraube 48 sitzenden Büchse drehbar gelagert sein. Die Büchse, die in den Zeichnungen nicht dargestellt ist, dient als Distanzhalter, damit beim Anziehen der Mutter 49 der Querschnitt des Rohres 41 nicht so weit verdrückt wird, dass das Ritzel 46 im Inneren des Rohres 41 klemmt. Derartige Lagerungen sind dem Fachmann bekannt und brauchen deswegen in der Zeichnung nicht dargestellt werden. Sie würden die Zeichnung nur unnötig mit Details belasten.

Die Zentriereinrichtung 35 umfasst ferner zwei Zahnstangen 51 und 52, die kämmend mit dem Ritzel 46 in Eingriff stehen. Die eine der beiden Zahnstangen verläuft wie gezeigt unterhalb des Ritzels 46, während die andere Zahnstange 51 darüber in dem Rohr 41 geführt ist. Die Zahnstange 51 geht an einem Ende wie gezeigt einstückig in den Arm 4

Die erforderliche Lage des Mittelstücks 37 braucht nicht exakt die Mittelstellung zwischen den beiden Endstücken 43 sein. Sie richtet sich vielmehr nach der Lage der Rollobahn 18. Das Mittelstück 37 muss so einjustiert werden, dass im ausgefahrenen Zustand in der Rollobahn 18 keine Querkräfte auftreten, die zu schräg verlaufenden Längsfalten führen. Zu diesem Zweck kann die Lage des Differentialgetriebes 45 verändert werden. Hierzu wird, wenn das Rollo im Kraftfahrzeug montiert ist, durch eine entsprechende Aussparung 55 in der Schlaufe 19 die Mutter 49 gelöst. Damit ist die zugehörige Schraube 48, die als Lagerachse für das Ritzel 46 dient, längs dem Langloch 47 verstellbar. Ohne dass das Ritzel 46 in Gang gesetzt wird und sich damit der Abstand zwischen den Endstücken verändern würde, kann das Mittelstück 37, das von dem Rohr 41 gebildet ist auf den Armen 42 in der betreffenden Richtung verschoben werden, so lange bis die Schrägfalten in der Rollobahn 18 verschwunden sind. In dieser Stellung wird die Mutter 49 erneut angezogen und damit die Achse in dem Langloch 47 festgelegt. Das Differentialgetriebe 45 arbeitet damit wie oben beschrieben.

Wenn der Benutzer im Sinne des Ausfahrens den Getriebemotor 23 in Gang setzt, werden die Schubglieder 33, 34 zunehmend in Richtung auf die zugehörigen Führungsschienen 14 vorgeschoben. Dabei schieben sie die Führungsstücke 43, die in den Nuten 14 sitzen, vor sich her. Die Führungsstücke 43 sind mit dem Mittelstück 41 fest verbunden und nehmen auch die Rollobahn 18 mit. Die Rollobahn 18 wird kontinuierlich gegen die Wirkung des Federmotors 17 von der Wickelwelle 16 abgewickelt. In jeder Betriebsstellung wird die Rollobahn 18 mit dem Zugstab 21 und der Wickelwelle 16 gespannt gehalten. Aus der Sicht des sich bewegenden Zugstabs 21 nähern sich die beiden Führungsschienen 13 kontinuierlich aneinander an. Dieser bedingt, dass sich die Endstücke 38, 39 aufeinander zu bewegen. Diese Relativbewegung setzt das Ritzel 46 in Gang, dessen Lagerachse in dem Mittelstück 37 festgelegt ist. Das Mittelstück 37 wird also immer eine zentrierte Lage beibehalten, d.h. die Endstücke 38, 39 bewegen sich um jeweils gleiche Beträge gegenüber dem Mittelstück 37. 2 des Endstücks 23 über, während die andere Zahnstange 52 in sinngemäß der gleichen Weise einstückig in dem Arm 42 des anderen Endstücks 38 übergeht.

Die Funktions- und Arbeitsweise der Zentriereinrichtung 45 ist leicht zu erkennen:

Wenn sich das Endstück 39 gegenüber dem Rohr 41 in Längsrichtung verschiebt, wird über die Zahnstange 51 das Ritzel 46 in Umdrehungen versetzt. Die Rotation überträgt die Bewegung der Zahnstange 51 gegensinnig auf die Zahnstange 52, wodurch die Zahnstange 52 um denselben Betrag jedoch gegensinnig verschoben wird. Die Folge hiervon ist, dass das betreffende Endstück 38 gegenüber dem Mittelstück 37 eine Bewegung vollführt, die den gleichen Hub hat, wie die Bewegung des anderen Endstücks 39 jedoch die entgegengesetzte Richtung. Wenn also im Ausgangszustand das Mittelstück 37 exakt zentriert zwischen den beiden Führungsstücken 38, 39 sitzt, wird diese exakte Zentrierung auch beibehalten, wenn eines der beiden Endstücke 38, 39 verschoben wird. Umgekehrt bleibt die Zentrierung des Mittelstücks 37 auch erhalten, wenn durch von außen wirkende Kräfte die beiden Endstücke 38, 39 aufeinander zu oder voneinander weg bewegt werden.

Es versteht sich, dass die Länge der Zahnstangen 51, 52 dem erforderlichen Hub entspricht und der von Zahnstangen freie Teil der Arme 42 so bemessen ist, dass eine ausreichende teleskopartige Führung in dem Rohr 41 gewährleistet ist, die über den gesamten betriebsmäßigen Hub klemmfrei ist.

Die erforderliche Lage des Mittelstücks 37 braucht nicht exakt die Mittelstellung zwischen den beiden Endstücken 43 sein. Sie richtet sich vielmehr nach der Lage der Rollobahn 18. Das Mittelstück 37 muss so einjustiert werden, dass im ausgefahrenen Zustand in der Rollobahn 18 keine Querkräfte auftreten, die zu schräg verlaufenden Längsfalten führen. Zu diesem Zweck kann die Lage des Differentialgetriebes 45 verändert werden. Hierzu wird, wenn das Rollo im Kraftfahrzeug montiert ist, durch eine entsprechende Aussparung 55 in der Schlaufe 19 die Mutter 49 gelöst. Damit ist die zugehörige Schraube 48, die als Lagerachse für das Ritzel 46 dient, längs dem Langloch 47 verstellbar. Ohne dass das Ritzel 46 in Gang gesetzt wird und sich damit der Abstand zwischen den Endstücken verändern würde, kann das Mittelstück 37, das von dem Rohr 41 gebildet ist auf den Armen 42 in der betreffenden Richtung verschoben werden, so lange bis die Schrägfalten in der Rollobahn 18 verschwunden sind. In dieser Stellung wird die Mutter 49 erneut angezogen und damit die Achse in dem Langloch 47 festgelegt. Das Differentialgetriebe 45 arbeitet damit wie oben beschrieben.

Wenn der Benutzer im Sinne des Ausfahrens den Getriebemotor 23 in Gang setzt, werden die Schubglieder 33, 34 zunehmend in Richtung auf die zugehörigen Führungsschienen 14 vorgeschoben. Dabei schieben sie die Führungsstücke 43, die in den Nuten 14 sitzen, vor sich her. Die Führungsstücke 43 sind mit dem Mittelstück 41 fest verbunden und nehmen auch die Rollobahn 18 mit. Die Rollobahn 18 wird kontinuierlich gegen die Wirkung des Federmotors 17 von der Wickelwelle 16 abgewickelt. In jeder Betriebsstellung wird die Rollobahn 18 mit dem Zugstab 21 und der Wickelwelle 16 gespannt gehalten. Aus der Sicht des sich bewegenden Zugstabs 21 nähern sich die beiden Führungsschienen 13 kontinuierlich aneinander an. Dieser bedingt, dass sich die Endstücke 38, 39 aufeinander zu bewegen. Diese Relativbewegung setzt das Ritzel 46 in Gang, dessen Lagerachse in dem Mittelstück 37 festgelegt ist. Das Mittelstück 37 wird also immer eine zentrierte Lage beibehalten, d.h. die Endstücke 38, 39 bewegen sich um jeweils gleiche Beträge gegenüber dem Mittelstück 37.

Figur 5 zeigt eine weitere Alternative wie das Differenzialgetriebe 45 gegenüber der Querkante der Rollobahn 18 eingestellt werden kann. Das Differenzialgetriebe 45 innerhalb des Mittelstücks 37 ist in derselben Weise aufgebaut wie dies anhand von Figur 3 erläutert ist. Lediglich mit der Einschränkung, dass anstelle des Langloches 47 ein einfaches Durchgangsloch verwendet wird, so dass die Achse des Ritzels 46 in Längsrichtung des Mittelstücks 37 nicht verschoben werden kann.

Abweichend von den vorherigen Ausführungsbeispiel enthält außerdem das das Mittelstück 37 bildende Profilrohr 41 an der Unterseite eine über die gesamte Länge durchlaufende Leiste 52, die in gleichmäßigen Abstand mit Löchern 53 versehen ist.

Beim Montieren des erfindungsgemäßen Rollos wird die Rollobahn 18 ausgefahren. Sodann wird auf dem Mittelstück 37, das wegen des Differentialgetriebes 45 in Längsrichtung des Mittelstücks 37 zwischen den Endsücken 38 und 39 fixiert ist, die obere Kante der Rollobahn 18 mit der Schlaufe 19 so lange verschoben, bis die schrägen Längsfalten verschwunden sind. In dieser Stellung weist die obere Querkante der Rollobahn 18 keinen seitlichen Versatz gegenüber dem auf der Wickelwelle 11 befindlichen Ballen auf. In dieser Position wird durch ein ungefähr in der Mitte befindliches Loch 52 ein Blindniet 54 eingesetzt, der auch gleichzeitig, wie gezeigt, das Material der Rollobahn 18 im Bereich der Schlaufe 19 an beiden Seiten durchdringt. Damit ist die betreffende Rollobahnkante in Längsrichtung bezüglich des Auszugsstabs 21 fixiert. Beim Ausfahren wird wieder genau dieselbe Position erreicht, in der keine Schrägfalten in der Rollobahn 18 auftreten können, selbst dann, wenn im unteren eingefahrenen Bereich durch Toleranzen der seitlichen Lage der Führungsschienen 13 der Zugstab 21 an sich in der Schlaufe 19 verrutschen will.

Ein Fensterrollo für Kraftfahrzeuge weist eine drehbar gelagerte Wickelwelle auf, an der mit einer Kante eine Rollobahn befestigt ist. Die andere Kante ist an einem Zugstab gefesselt, der endseitig in Führungsschienen geführt ist. Der Abstand der Führungsschienen ändert sich in Bewegungsrichtung der Rollobahn gesehen sehr stark, weshalb der Zugstab teleskopartig längenveränderlich ist. Er setzt sich aus einem Mittelstück und zwei Endstücken zusammen, wobei mit Hilfe eines Differenzialgetriebes dafür gesorgt wird, dass das Mittelstück immer zentriert gegenüber den Endstücken bleibt. Die Lage deas Differenzialgetriebe in Längsrichtung der Querkante der Rollobahn ist einstellbar.

## Patentansprüche

1. Fensterrollo () zum Regulieren des Lichteintritts durch ein Fenster in einen Innenraum eines Kraftfahrzeugs,
mit wenigstens einer Wickelwelle (16), die drehbar gelagert ist,
mit wenigstens einer Rollobahn (18), die mit einer Kante an der Wickelwelle (16) befestigt ist,
mit wenigsten einem Paar von Führungsmitteln (13), von denen sich jedes seitlich neben der aufgespannten Rollobahn (16) erstreckt und die jeweils wenigsten eine Führungsnut (14) enthalten,
mit einem längenveränderlichen Zugstab (21), der mit einer von der Wickelwelle (16) abliegenden Kante verbunden ist und der sich aus einem Mittelstück (37) und zwei Endstücken (38,39) zusammensetzt, von denen die Endstücke (38,39) in den Führungsnuten (14) geführt sind,
mit einem Differenzialgetriebe (45), das das Mittelstück (37) bezüglich der Endstücke (38,39) zumindest angenähert zentriert und das die Bewegung eines Endstücks (38,23) relativ zu dem Mittelstück (27) auf das andere Endstück (28,29) gegensinnig überträgt, wobei die Lage des Differenzialgetriebes (45) gegenüber der Rollobahnkante in Längsrichtung des Zugstabs (21) einstellbar ist.

2. Fensterrollo nach Anspruch 1, **dadurch gekennzeichnet, dass** die Bewegungen der beiden Endstücke (38,39) jeweils betragsmäßig gleich sind.

3. Fensterrollo nach Anspruch 1, **dadurch gekennzeichnet, dass** das Mittelstück (37) von einem Rohr (41) gebildet ist.

4. Fensterrollo nach Anspruch 3, **dadurch gekennzeichnet, dass** das Rohr (41) ein Profilrohr ist.

5. Fensterrollo nach Anspruch 1, **dadurch gekennzeichnet, dass** die Endstücke (38,39) in dem Mittelstück (37) teleskopartig geführt sind.

6. Fensterrollo nach Anspruch 1, **dadurch gekennzeichnet, dass** das Differenzialgetriebe (45) ein formschlüssiges oder reibschlüssiges Getriebe ist.

7. Fensterrollo nach Anspruch 1, **dadurch gekennzeichnet, dass** das Differenzialgetriebe (45) ein durch das Mittelstück (37) gelagertes Zahnrad (46) sowie zwei Zahnstangen (51,52) umfasst, die mit dem Zahnrad (46) kämmen und von denen jede mit einem der Endstücke (38,39) verbunden ist.

8. Fensterrollo nach Anspruch 1, **dadurch gekennzeichnet, dass** dem Zahnrad (46) eine Achse (48) zugeordnet ist, die mit wenigstens einem Ende in einem Langloch (47) sitzt, dessen lange Achse in Richtung parallel zu der Längsachs des Mittelstücks (37) verläuft.

9. Fensterrollo nach Anspruch 8, **dadurch gekennzeichnet, dass** die Achse (48) in dem Langloch (47) arretierbar ist.

10. Fensterrollo nach Anspruch 1, **dadurch gekennzeichnet, dass** das Mittelstück (37) in einer an der Rollobahnkante ausgebildeten schlauchförmigen Schlaufe (19) steckt.

11. Fensterrollo nach Anspruch 1, **dadurch gekennzeichnet, dass** der Schlaufe (19) Mittel (52,53,54) zugeordnet sind, mittels derer das Mittelstück (37) in der Schlaufe (19) in der jeweils eingestellten Lage fixierbar ist.

12. Fensterrollo nach Anspruch 1, **dadurch gekennzeichnet, dass** die Führungsnuten (14) seitlich der aufgespannten Rollobahn (18) verlaufen.

13. Fensterrollo nach Anspruch 1, **dadurch gekennzeichnet, dass** die Führungsnuten (14) hinterschnittene Führungsnuten sind.

14. Fensterrollo nach Anspruch 1, **dadurch gekennzeichnet, dass** es eine Antriebseinrichtung (22,17) zum Bewegen des Zugstabs (21) längs der Führungsschienen (13) und zum Drehen der Wickelwelle (16) aufweist.

15. Fensterrollo nach Anspruch 14, **dadurch gekennzeichnet, dass** der Wickelwelle (16) ein Federmotor (17) zugeordnet ist, der die Wickelwelle (16) im Aufwickelsinn vorspannt.

16. Fensterrollo nach Anspruch 14, **dadurch gekennzeichnet, dass** die Antriebseinrichtung (22,17) zum Bewegen des Zugstabs (21) zwei Antriebsglieder (33,34) umfasst.

17. Fensterrollo nach Anspruch 14, **dadurch gekennzeichnet, dass** die Antriebseinrichtung (22,17) einen Getriebemotor (23) umfasst.

18. Fensterrollo nach Anspruch 16, **dadurch gekennzeichnet, dass** die Antriebsglieder (33,34) biegsame linienförmige Schubglieder sind, die knicksicher zwischen dem Getriebemotor (23) und der betreffenden Führungsnut (14) geführt sind.

19. Fensterrollo nach Anspruch 16, **dadurch gekennzeichnet, dass** die Antriebsglieder (33,34) angenähert zylindrische Gebilde sind, die mit einer Verzahnung (36) auf der Außenseite versehen sind, die über die Länge mit konstanter Teilung durchläuft.

20. Fensterrollo nach Anspruch 19, **dadurch** gekerinzeichnet, dass die Verzahnung (36) von einer auf der Außenseite schraubenförmig verlaufenden Rippe gebildet ist.

21. Fensterrollo nach Anspruch 16, **dadurch gekennzeichnet, dass** die Antriebsglieder (33,34) mit dem Getriebemotor (23) formschlüssig zusammenwirken.

22. Fensterrollo nach Anspruch 1, **dadurch gekennzeichnet, dass** die Rollobahn (18) aus einem Gewirk oder einer gelochten Folie besteht.
